# EUROPEAN PATENT APPLICATION

(11) **EP 2 512 175 A1**
(43) Date of publication of application: **17.10.2012**
(21) Application number: 11736607.0
(22) Date of filing: 12.01.2011
(51) Int. Cl.: H04W 24/10

(54) **METHOD AND EQUIPEMENT FOR COORDINATING INTERFERENCE**

(30) Priority: 28.01.2010 CN 201010104182
(71) Applicant: Huawei Technologies Co., Ltd., Shenzhen, Guangdong 518129 (CN)
(72) Inventor: XIAO, Dengkun, Shenzhen Guangdong 518129 (CN); HUANG, Jian, Shenzhen Guangdong 518129 (CN)
(74) Representative: Schmitz, Alexander
(86) International application number: PCT/CN2011/070215
(87) International publication number: WO 2011/091725

(57) **Abstract**

The present invention provides a method and an apparatus for interference coordination processing. The method includes: obtaining region information of a positioned time-frequency resource block according to received transmission signaling, where the positioned time-frequency resource block is a time-frequency resource block scheduled by an interfered user equipment of an interfered cell in each overlapped sub-region; obtaining, according to a scheduling result of a current cell, region information of a time-frequency resource block that is scheduled by a user equipment in the current cell in each overlapped sub-region; obtaining time-frequency resource blocks in the overlapped sub-region according to the region information of the positioned time-frequency resource block and the region information of the time-frequency resource block that is scheduled by the user equipment in the current cell; and if the positioned time-frequency resource block in the overlapped sub-region is the same as the time-frequency resource block scheduled by the user equipment in the current cell, performing interference coordination processing on the time-frequency resource block that is in the current cell and is the same as the positioned time-frequency resource block. Embodiments of the present invention provide an apparatus for interference coordination processing. According to the embodiments of the present invention, the accuracy of interference coordination is greatly improved.

## Description

This application claims priority to Chinese Patent Application No. 201010104182.9, filed with the Chinese Patent Office on January 28, 2010 and entitled "METHOD AND APPARATUS FOR INTERFERENCE COORDINATION PROCESSING", which is incorporated herein by reference in its entirety.

### FIELD OF THE INVENTION

Embodiments of the present invention relate to the field of communication technologies, and in particular, to a method and an apparatus for interference coordination processing.

### BACKGROUND OF THE INVENTION

In a long-term evolution advanced (Long-term Evolution Advance, LTE-A for short) system, to improve high data rate coverage, temporary network coverage, and cell edge throughput, and to fill a coverage hole and a weak signal region, a low-power node such as a hotspot, a home base station, and a relay station is deployed inside a cell of a macro base station. Therefore, an introduced heterogeneous network makes a situation of a radio channel more complicated. Accordingly, interference is more complicated, and downlink interference on a user terminal (User Equipment, UE for short) is more serious. Therefore, reducing the downlink interference on a UE is particularly important.

The inter-cell interference compensation technology is mainly divided into three types: an inter-cell interference randomization technology, an inter-cell interference cell technology, and an inter-cell interference coordination technology, where the inter-cell interference coordination (Inter-Cell Interference Coordination, ICIC for short) technology has become a mainstream technology for reducing inter-cell interference due to its merits such as simplicity, flexibility, and idea effects. The downlink ICIC technology performs interference coordination by transferring load information (Load Information, LI for short) between cells. The LI includes an overload indicator (Overload Indicator, OI), a high interference indicator (High interference indicator, HII), and relative narrowband transmit power (Relative Narrowband Transmit Power, RNTP for short). The conventional ICIC method is to use a blind adjustment policy, that is, an estimation manner, to determine whether the UE that generates interference is located in a cell to be adjusted, thereby determining a cell that causes interference. However, a misjudgment on the cell that generates interference is easily caused, and therefore, a subsequent incorrect adjustment is caused.

### SUMMARY OF THE INVENTION

Embodiments of the present invention provide a method and an apparatus for interference coordination processing, so as to solve incorrect adjustment caused by a case that a blind adjustment policy is used to perform interference coordination in the prior art.

An embodiment of the present invention provides a method for interference coordination processing, including:
obtaining region information of a positioned time-frequency resource block according to received transmission signaling, where the positioned time-frequency resource block is a time-frequency resource block scheduled by an interfered user equipment of an interfered cell in each overlapped sub-region;
obtaining, according to a scheduling result of a current cell, region information of a time-frequency resource block that is scheduled by a user equipment in the current cell in each overlapped sub-region;
obtaining time-frequency resource blocks in the overlapped sub-region according to the region information of the positioned time-frequency resource block and the region information of the time-frequency resource block that is scheduled by the user equipment in the current cell; and
if the positioned time-frequency resource block in the overlapped sub-region is the same as the time-frequency resource block scheduled by the user equipment in the current cell, performing interference coordination processing on the time-frequency resource block that is in the current cell and is the same as the positioned time-frequency resource block.

An embodiment of the present invention provides another method for interference coordination processing, including:
obtaining, according to received transmission signaling, coordinate information of a time-frequency resource block that is scheduled by an interfered user equipment in an interfered cell;
obtaining, according to a scheduling result of a current cell, coordinate information of a time-frequency resource block that is scheduled by a user equipment in the current cell;
obtaining, according to the coordinate information of the time-frequency resource block that is scheduled by the interfered user equipment and the coordinate information of the time-frequency resource block that is scheduled by the user equipment in the current cell, a distance between the time-frequency resource block scheduled by the interfered user equipment and the time-frequency resource block scheduled by the user equipment in the current cell; and
if the distance between the time-frequency resource block scheduled by the interfered user equipment and the time-frequency resource block scheduled by the user equipment in the current cell is smaller than a preset distance threshold, performing interference coordination processing on the time-frequency resource block that is in the current cell and whose distance from the time-frequency resource block scheduled by the interfered user equipment is smaller than the distance threshold.

An embodiment of the present invention provides an apparatus for interference coordination processing, including:
a first obtaining module, configured to obtain region information of a positioned time-frequency resource block according to received transmission signaling, where the positioned time-frequency resource block is a time-frequency resource block scheduled by an interfered user equipment of an interfered cell in each overlapped sub-region;
a second obtaining module, configured to obtain, according to a scheduling result of a current cell, region information of a time-frequency resource block that is scheduled by a user equipment in the current cell in each overlapped sub-region;
a third obtaining module, configured to obtain time-frequency resource blocks in the overlapped sub-region according to the region information that is of the positioned time-frequency resource block and is obtained by the first obtaining module and the region information that is of the time-frequency resource block scheduled by the user equipment of the current cell and is obtained by the second obtaining module; and
a first interference coordination processing module, configured to perform interference coordination processing on the time-frequency resource block that is in the current cell and is the same as the positioned time-frequency resource block if the positioned time-frequency resource block that is in the overlapped sub-region and is obtained by the third obtaining module is the same as the time-frequency resource block scheduled by the user equipment in the current cell.

An embodiment of the present invention provides another apparatus for interference coordination processing, including:
a fourth obtaining module, configured to obtain, according to received transmission signaling, coordinate information of a time-frequency resource block that is scheduled by an interfered user equipment in an interfered cell;
a fifth obtaining module, configured to obtain, according to a scheduling result of a current cell, coordinate information of a time-frequency resource block that is scheduled by a user equipment in the current cell;
a sixth obtaining module, configured to obtain a distance between the time-frequency resource block scheduled by the interfered user equipment and the time-frequency resource block scheduled by the user equipment in the current cell, according to the coordinate information that is of the time-frequency resource block scheduled by the interfered user equipment and is obtained by the fourth obtaining module and the coordinate information that is of the time-frequency resource block scheduled by the user equipment in the current cell and is obtained by the fifth obtaining module; and
a second interference coordination processing module, configured to perform, if the distance that is between the time-frequency resource block scheduled by the interfered user equipment and the time-frequency resource block scheduled by the user equipment in the current cell and is obtained by the sixth obtaining module is smaller than a preset distance threshold, interference coordination processing on the time-frequency resource block that is in the current cell and whose distance from the time-frequency resource block scheduled by the interfered user equipment is smaller than the distance threshold.

With the method and apparatus for interference coordination processing in the embodiments of the present invention, each neighboring cell of the interfered cell obtains, according to the received transmission signaling sent by the interfered cell, region information of a time-frequency resource block that is scheduled by an interfered user equipment of the interfered cell in each overlapped sub-region; then obtains region information of a time-frequency resource block that is scheduled by a user equipment in the current cell in each overlapped sub-region; and if the time-frequency resource block that is obtained according to respective region information and is scheduled by the interfered user equipment in a certain overlapped sub-region is the same as the time-frequency resource block scheduled by the user equipment in the current cell, performs interference coordination processing on the time-frequency resource block that is in the neighboring cell and is the same as the time-frequency resource block scheduled by the interfered user equipment. According to the embodiments, the problem of incorrect adjustment caused by the case that a blind adjustment policy to is used to perform interference coordination in the prior art is solved, and it is implemented that accurate scheduling is performed, according to the position information of the interfered UE, on the time-frequency resource block in the cell that generates interference, so that the inter-cell interference coordination algorithm is more accurate and the accuracy of the interference coordination is improved greatly.

### BRIEF DESCRIPTION OF THE DRAWINGS

To make the technical solutions in embodiments of the present invention or in the prior art clearer, the accompanying drawings used in the description of the embodiments or the prior art are briefly described below. Apparently, the accompanying drawings in the following description are only some embodiments of the present invention, and persons of ordinary skill in the art can further derive other drawings according to such accompanying drawings without creative efforts.

FIG. 1 is a flowchart of an embodiment of a method for interference coordination processing according to the present invention;

FIG. 2 is a flowchart of another embodiment of a method for interference coordination processing according to the present invention;

FIG. 3 is a schematic diagram of division of overlapped sub-regions in another embodiment of a method for interference coordination processing according to the present invention;

FIG. 4 is a first schematic diagram of region information in another embodiment of a method for interference coordination processing according to the present invention;

FIG. 5 is a second schematic diagram of region information in another embodiment of a method for interference coordination processing according to the present invention;

FIG. 6 is a third schematic diagram of region information in another embodiment of a method for interference coordination processing according to the present invention;

FIG. 7 is a fourth schematic diagram of region information in another embodiment of a method for interference coordination processing according to the present invention;

FIG. 8 is a fifth schematic diagram of region information in another embodiment of a method for interference coordination processing according to the present invention;

FIG. 9 is a flowchart of another embodiment of a method for interference coordination processing according to the present invention;

FIG. 10 is a flowchart of another embodiment of a method for interference coordination processing according to the present invention;

FIG. 11 is a flowchart of another embodiment of a method for interference coordination processing according to the present invention;

FIG. 12 is a schematic diagram of coordinate information in another embodiment of a method for interference coordination processing according to the present invention;

FIG. 13 is a second schematic diagram of coordinate information in another embodiment of a method for interference coordination processing according to the present invention;

FIG. 14 is a flowchart of another embodiment of a method for interference coordination processing according to the present invention;

FIG. 15 is a schematic structural diagram of an embodiment of an apparatus for interference coordination processing according to the present invention;

FIG. 16 is a schematic structural diagram of another embodiment of an apparatus for interference coordination processing according to the present invention; and

FIG. 17 is a schematic structural diagram of another embodiment of an apparatus for interference coordination processing according to the present invention.

### DETAILED DESCRIPTION OF THE EMBODIMENTS

To make the objectives, technical solutions, and advantages of the embodiments of the present invention clearer, the technical solutions in the embodiments of the present invention are described clearly and completely below with reference to the accompanying drawings in the embodiments of the present invention. Evidently, the described embodiments are only part rather than all of the embodiments of the present invention. All other embodiments derived by persons of ordinary skill in the art based on the embodiments of the present invention without creative effort shall fall within the protection scope of the present invention.

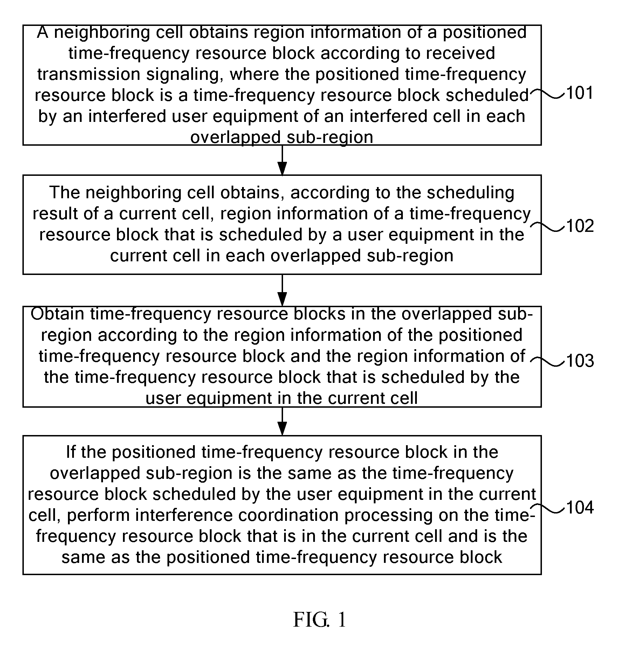

FIG. 1 is a flowchart of an embodiment of a method for interference coordination processing according to the present invention. As shown in FIG. 1, the embodiment provides a method for interference coordination processing, and may be described as follows:

101. A neighboring cell obtains region information of a positioned time-frequency resource block according to received transmission signaling, where the positioned time-frequency resource block is a time-frequency resource block scheduled by an interfered user equipment of an interfered cell in each overlapped sub-region.

For example, the interfered cell is a serving cell, and the neighboring cell is a neighboring cell of the interfered cell.

102. The neighboring cell obtains, according to a scheduling result of a current cell, region information of a time-frequency resource block that is scheduled by a user equipment in the current cell in each overlapped sub-region.

103. The neighboring cell obtains time-frequency resource blocks in the overlapped sub-region according to the region information of the positioned time-frequency resource block and the region information of the time-frequency resource block that is scheduled by the user equipment in the current cell.

104. If the positioned time-frequency resource block in the overlapped sub-region is the same as the time-frequency resource block scheduled by the user equipment in the current cell, the neighboring cell performs interference coordination processing on the time-frequency resource block that is in the current cell and is the same as the time-frequency resource block scheduled by the interfered user equipment.

The embodiment provides a method for interference coordination processing. Each neighboring cell of the interfered cell obtains, according to the received transmission signaling sent by the interfered cell, region information of a time-frequency resource block that is scheduled by an interfered user equipment of the interfered cell in each overlapped sub-region; then obtains region information of a time-frequency resource block that is scheduled by a user equipment in the current cell in each overlapped sub-region; and if the time-frequency resource block that is obtained according to respective region information and is scheduled by the interfered user equipment in an overlapped sub-region is the same as the time-frequency resource block scheduled by the user equipment in the current cell, performs interference coordination processing on the time-frequency resource block that is in the neighboring cell and is the same as the time-frequency resource block scheduled by the interfered user equipment. According to the embodiment, the problem of incorrect adjustment caused by the case that a blind adjustment policy is used to perform interference coordination in the prior art is solved, and it is implemented that accurate scheduling is performed, according to the position information of the interfered UE, on the time-frequency resource block in the cell that generates interference, so that the inter-cell interference coordination algorithm is more accurate and the accuracy of the interference coordination is improved greatly.

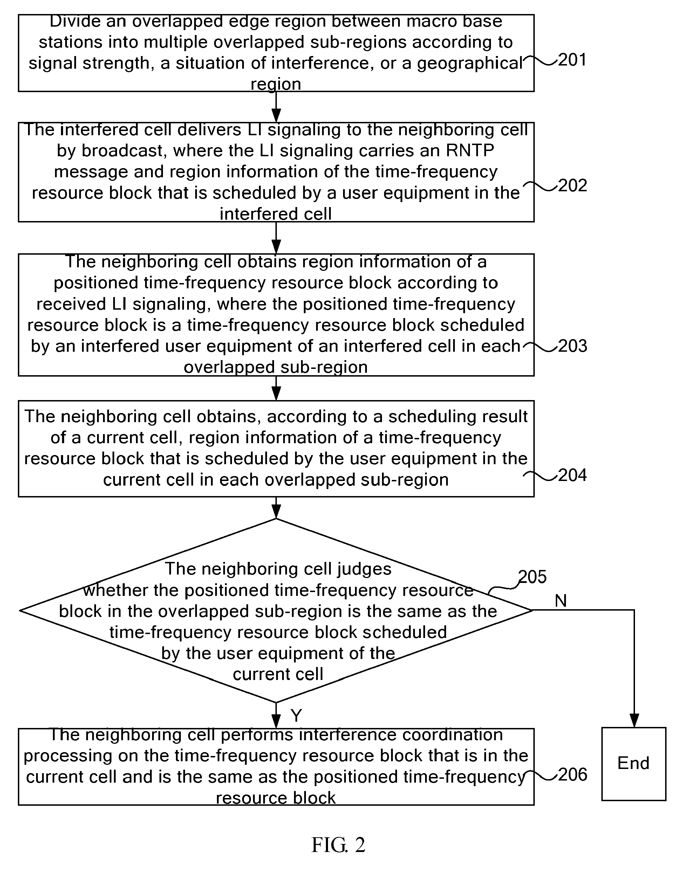

FIG. 2 is a flowchart of another embodiment of a method for interference coordination processing according to the present invention. As shown in FIG. 2, the embodiment provides a method for interference coordination processing, and is a specific implementation of the above embodiment. The embodiment may be applied in an interference coordination scenario of downlink transmission. Those skilled in the art may understand that, the embodiment may also be applied in an orthogonal frequency division multiplexing (Orthogonal Frequency Division Multiplexing, OFDM) system such as a LTE or a LTE-A, and the embodiment may be described as follows:

201. Divide an overlapped edge region between macro base stations into multiple overlapped sub-regions according to signal strength, a situation of interference, or a geographical region, and notify the divided overlapped sub-regions to a neighboring macro base station and a low-power node.

In the LTE-A system, a low-power node such as a pico cell (pico cell) and a home base station is deployed in a cell of a macro base station. The division of the overlapped edge region between a base station and a low-power node may be already confirmed at a network deployment stage, and geographical region information may also be acquired at the network deployment stage. The base station may judge, according to a measurement report result of the UE, whether the UE is located at the overlapped edge region.

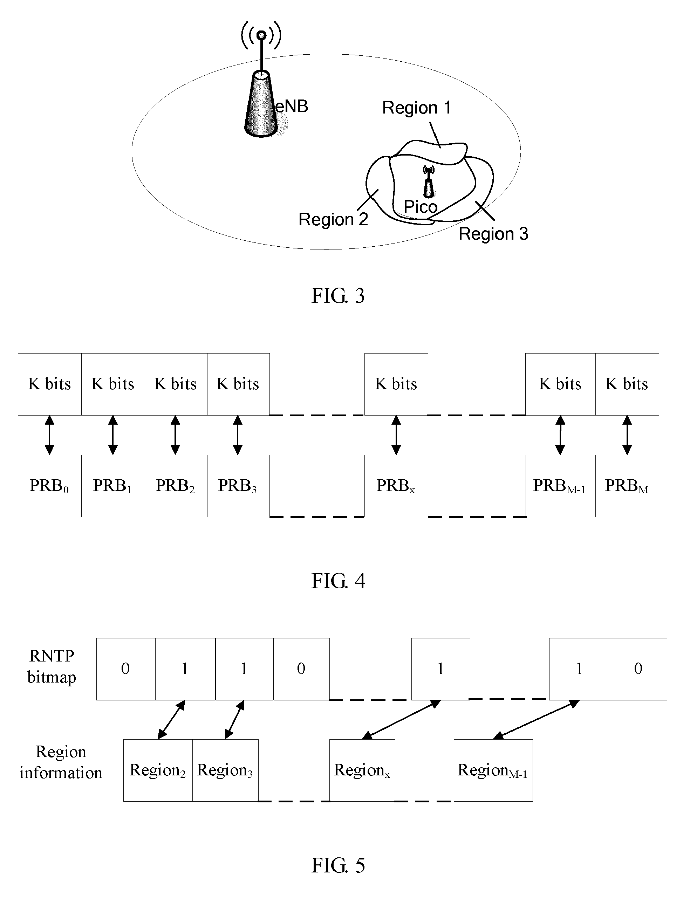

In the embodiment, before the interference coordination processing procedure is executed, the base station in the interfered cell divides, according to signal strength of the base station, a situation of interference between cells, or a geographical region, an overlapped edge region between macro base stations and an overlapped edge region between a macro base station and a low-power node, and divides the overlapped edge region into several overlapped sub-region according to an actual situation; and notifies, through signaling, the divided overlapped sub-regions to a neighboring macro base station of the interfered cell and a neighboring low-power node of the interfered cell. FIG. 3 is a schematic diagram of division of overlapped sub-regions in another embodiment of a method for interference coordination processing according to the present invention. As shown in FIG. 3, a case that the overlapped edge region is divided into three overlapped sub-regions is taken as an example here for illustration, namely, Region 1, Region 2, and Region 3.

In the LTE-A system, a low-power node such as a pico cell (pico cell) and a home base station is deployed in a cell of a macro base station. In the embodiment, before the interference coordination processing procedure is executed, the base station in the interfered cell may also divide, according to signal strength of the base station, a situation of interference between cells, and a geographical region, an overlapped edge region between macro base stations and an overlapped edge region between a macro base station and a low-power node, and divide the overlapped edge region into several overlapped sub-regions according to an actual situation; and notify, through signaling, the divided overlapped sub-regions to a neighboring macro base station of the interfered cell and a neighboring low-power node of the interfered cell.

202. The interfered cell delivers LI (Load Indication, load indication) signaling to the neighboring cell by broadcast, where the LI signaling carries an RNTP message and region information of the time-frequency resource block that is scheduled by a user equipment in the interfered cell.

In 202, the interfered cell is a serving cell, and the neighboring cell is a neighboring cell of the interfered cell. When downlink transmission is performed, in the interfered cell, transmit power of the base station on the time-frequency resource blocks that are scheduled by each user equipment varies. When the transmit power on the time-frequency resource block that is scheduled by a certain user equipment exceeds the preset RNTP threshold, the time-frequency resource block is positioned, so as to identify that the time-frequency resource block is interfered greatly, that is, in the embodiment, the positioned time-frequency resource block is a time-frequency resource block scheduled by the interfered user equipment in the interfered cell. When a proportion of positioned time-frequency resource blocks in the interfered cell exceeds a preset proportion threshold, the interfered cell is triggered to deliver LI signaling to the neighboring cell by broadcast, where the LI signaling carries an RNTP message and region information of time-frequency resource blocks that are scheduled by all user equipments in the interfered cell. The RNTP threshold and proportion here may be preset according to an actual situation. Table 1 describes a signaling structure of LI signaling in the embodiment.

**Table 1 Signaling structure of LI signaling in the embodiment**

| **IE/Group Name** | **Presence** | **Range** | **IE type and reference** | **Semantics description** | **Criticality** | **Assigned Criticality** |
|---|---|---|---|---|---|---|
| Message Type | M | | 9.2.15 | | YES | ignore |
| Cell Information | M | | | | YES | ignore |
| > Cell Information Item | | 1 to maxCellineNB | | | EACH | ignore |
| >>Cell ID | M | | ECGI 9.2.16 | Id of the source cell | - | - |
| >>UL Interference Overload Indication | O | | 9.2.19 | | - | - |
| >>UL High Interference Information | | 0 to maxCellineNB | | | - | - |
| >>>UL High Interference Indication | M | | 9.2.20 | | - | - |
| >>>Target Cell ID | M | | ECGI 9.2.16 | Id of the cell for which the HII is meant | - | - |
| >> Relative Narrowband Tx Power (RNTP) | O | | 9.2.21 | | - | - |
| ***Used PRB in each region*** | ***M*** | | | | - | - |

The RNTP message is an existing message in the LI signaling of the existing protocol, while the region information of time-frequency resource blocks that are scheduled by all user equipments in the interfered cell, namely, "Used PRB in each region" in Table 1, is the content newly added by the embodiment to the LI signaling, and is added after the LI signaling content. The RNTP message includes positioning information of the time-frequency resource block that is scheduled by each user equipment in the interfered cell, namely, an RNTP bitmap. The form of a bitmap (bitmap) is used to identify the positioning information of each time-frequency resource block. The binary 0 indicates that a corresponding time-frequency resource block is not positioned, that is, the transmit power on the corresponding time-frequency resource block does not exceed the RNTP threshold, and the binary 1 indicates that a corresponding time-frequency resource block is positioned, that is, the transmit power on the corresponding time-frequency resource block exceeds the RNTP threshold. It is assumed that there are totally 5 time-frequency resource blocks scheduled by the user equipment in the interfered cell, namely, **PRB₀, PRB₁,** ... , and **PRB₅,** where the transmit power on **PRB₀** and **PRB₄** exceeds the RNTP threshold, then the RNTP bitmap included in the RNTP message is 100010. The region information that is of the time-frequency resource blocks scheduled by all user equipments in the interfered cell and is carried in the LI signaling is used to indicate the region information of the overlapped sub-region where the time-frequency resource block scheduled by each user equipment is located.

For example, in the embodiment, the region information that is of the time-frequency resource block scheduled by the user equipment and is carried in the LI signaling delivered by broadcast is a bit value that corresponds to the region number of the overlapped sub-region where all time-frequency resource blocks in the interfered cell are located. As shown in FIG. 4, FIG. 4 is a first schematic diagram of region information in another embodiment of a method for interference coordination processing according to the present invention. FIG. 4 shows a method for adding region information to the LI signaling. The form of a bitmap is used to encode the region number of the overlapped sub-region where each time-frequency resource block is located. In FIG. 4, the first group of K bits corresponds to the zeroth time-frequency resource block **(PRB₀),** and the second group of K bits corresponds to the first time-frequency resource block **(PRB₁),** and so on. The K bits are used to indicate the region number. Three overlapped sub-regions are divided in FIG. 3, and only 2 bits are required to indicate the region number. The binary number "01" indicates the overlapped sub-region 1; the binary number "10" indicates the overlapped sub-region 2; and the binary number "11" indicates the overlapped sub-region 3. The region number of the overlapped sub-region specifically that corresponds to each time-frequency resource block may be obtained in a network setting process through a field test or a definition of the geographical region. It is assumed that the time-frequency resource blocks invoked by the user equipment of the interfered cell include **PRB₀, PRB₁,** ..., and **PRB₉,** where: **PRB₀, PRB₇,** and **PRB₈** are located in the overlapped sub-region 1, that is, all the region numbers corresponding to **PFB₀, PRB₇,** and **PRB₈** are a binary number 01; **PRB₁, PRB₂,** and **PRB₆** are located in the overlapped sub-region 2, that is, all the region numbers corresponding to **PRB₁, PRB₂,** and **PRB₆** are a binary number 10; and **PRB₃, PRB₄, PRB₅,** and **PRB₉** are located in the overlapped sub-region 3, that is, all the region numbers corresponding to **PRB₃, PRB₄, PRB₅,** and **PRB₉** are a binary number 11. Therefore, the region information carried in the LI signaling corresponds to 01101011111110010111.

Or, in the embodiment, the region information that is of the time-frequency resource block scheduled by the user equipment and is carried in the LI signaling delivered by broadcast is a bit value that corresponds to the region number of the overlapped sub-region where the positioned time-frequency resource block in the interfered cell is located. As shown in FIG. 5, FIG. 5 is a second schematic diagram of region information in another embodiment of a method for interference coordination processing according to the present invention. FIG. 5 shows another method for adding region information to the LI signaling, and the method is similar to the method shown in FIG. 4. In the method shown in FIG. 5, only the region information of the positioned time-frequency resource block may be added to the LI signaling. It can be known from the above that, the RNTP message already includes the positioning information of each time-frequency resource block, and therefore, in combination with the positioning information, the region information of the positioned time-frequency resource block may be acquired. In FIG. 5, the first row shows the RNTP bitmap in the RNTP message, where the binary number 1 identifies the positioned time-frequency resource block, while the second row shows the region information added to the LI signaling. The region information corresponds to the RNTP bitmap, and only the region number of the overlapped sub-region where the positioned time-frequency resource block is located is stored. The region number here is consistent with the region number shown in FIG. 4. It can be seen from the RNTP bitmap in FIG. 5 that, **PRB₁, PRB₂,** and so on are positioned, and accordingly, only the region number information of the overlapped sub-region where the positioned time-frequency resource blocks are located is added to the LI signaling. The assumption in FIG. 4 is still used an example for description here, and the positioned time-frequency resource blocks only include **PRB₁, PRB₂, PRB₄, PRB₈**, and **PRB₉,** and in this case, the region information carried in the LI signaling corresponds to 1010110111.

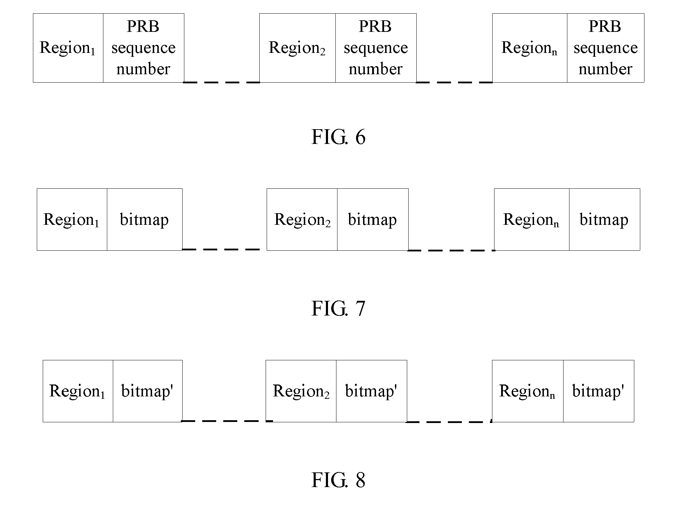

Or, in the embodiment the region information that is of the time-frequency resource block scheduled by the user equipment and is carried in the LI signaling delivered by broadcast is region number information of the overlapped sub-region and sequence number information of the positioned time-frequency resource block in the interfered cell in each overlapped sub-region. As shown in FIG. 6, FIG. 6 is a third schematic diagram of region information in another embodiment of a method for interference coordination processing according to the present invention. FIG. 6 shows still another method for adding region information to the LI signaling. The region number information of each overlapped sub-region is added to the LI signaling, and sequence number information of the time-frequency resource block in the overlapped sub-region whose transmit power exceeds the RNTP threshold is accordingly added after the information of each region number. The assumption in FIG. 4 is still used an example for description here, and the positioned time-frequency resource blocks only include **PRB₁, PRB₂, PRB₄, PRB₈,** and **PRB₉,** and in this case, the region information carried in the LI signaling corresponds to 01 8-10 1 2-11 4 9. The binary number 01 indicates the region number of the overlapped sub-region 1; the binary number 10 indicates the region number of the overlapped sub-region 2; and the binary number 11 indicates the region number of the overlapped sub-region 3, where the numbers 8, 1, 2, 4, and 9 indicate the sequence number information of the time-frequency resource blocks respectively. That is, the number 8 indicates **PRB₈;** and the number 1 indicates **PRB₁,** and so on. "-" is only for differentiating the three overlapped sub-regions. That is, "01 8" indicates that **PRB₈** is located in the overlapped sub-region 1; "10 1 2" indicates that **PRB₁** and **PRB₂** are located in the overlapped sub-region 2; and "11 4 9" indicates that **PRB₄** and **PRB₉** are located in the overlapped sub-region 3.

Or, in the embodiment, the region information that is of the time-frequency resource block scheduled by the user equipment and is carried in the LI signaling delivered by broadcast is region number information of the overlapped sub-region and region bit values of all time-frequency resource blocks in the interfered cell, where the region bit values are used to identify whether the time-frequency resource blocks are located in the current overlapped sub-region. As shown in FIG. 7, FIG. 7 is a fourth schematic diagram of region information in another embodiment of a method for interference coordination processing according to the present invention. FIG. 7 shows still another method for adding region information to the LI signaling. The region number of each overlapped sub-region is added to the LI signaling, and the region bit values of time-frequency resource blocks that are scheduled by all users in the interfered cell are added after each region number. The form of a bitmap is still used here to indicate a region bit value of each time-frequency resource block. The binary number 0 is used to indicate that the corresponding time-frequency resource block is not located in the current overlapped sub-region, and the binary 1 is used to indicate that the corresponding time-frequency resource block is located in the current overlapped sub-region. The assumption in FIG. 4 is still used an example for description here. Therefore, the region information carried in the LI signaling corresponds to 01 1000000110-10 0110001000-11 0001110001, where: the binary number 01 indicates the region number of the overlapped sub-region 1; the binary number 10 indicates the region number of the overlapped sub-region 2; the binary number 11 indicates the region number of the overlapped sub-region 3; and "-" is set only for differentiating the three overlapped sub-regions. The group of bits "01 1000000110" before the first "-" symbol in the embodiment is illustrated here. The two-bit binary number "01" before a space indicates the number information of the overlapped sub-region, that is, corresponds to the overlapped sub-region 1; and the ten-bit binary number after the space indicates region information of the ten time-frequency resource blocks **PRB₀, PRB₁,** ..., and **PRB₉** sequentially. However, the ten-bit binary number "1000000110" in the embodiment may indicate that the time-frequency resource blocks **PRB₀, PRB₇,** and **PRB₈** are located in the overlapped sub-region 1. That is, in the group of bits, a first bit of the binary number indicates the region information **of PRB₀,** and the first bit of the binary number is 1 here, indicating that **PRB₀** is located in the overlapped sub-region 1; and a second bit of the binary number indicates the region information of **PRB₁,** and the second bit is 0 here, indicating that **PRB₁** is not located in the overlapped sub-region 1, and so on.

Or, in the embodiment, the region information that is of the time-frequency resource block scheduled by the user equipment and is carried in the LI signaling delivered by broadcast is region number information of the overlapped sub-region and region bit values of positioned time-frequency resource blocks in the interfered cell, where the region bit values are used to identify whether the positioned time-frequency resource blocks are located in the current overlapped sub-region or not. As shown in FIG. 8, FIG. 8 is a fifth schematic diagram of region information in another embodiment of a method for interference coordination processing according to the present invention. FIG. 8 shows another method for adding region information to the LI signaling, and the method is similar to the method shown in FIG. 7. A difference between the method shown in FIG. 8 and the method shown in FIG. 7 lies in that, in the method shown in FIG. 8, only the region bit values of the time-frequency resource blocks whose transmit power exceeds the RNTP threshold are added after each region number. The assumption in FIG. 4 is still used as an example for description here. Therefore, the region information carried in the LI signaling corresponds to 01 00010-10 11000-11 00101. The binary number 01 indicates the region number of the overlapped sub-region 1; the binary number 10 indicates the region number of the overlapped sub-region 2; the binary number 11 indicates the region number of the overlapped sub-region 3; and "-" is set only for differentiating the three overlapped sub-regions. The group of bits "01 00010" before the first "-" symbol in the embodiment is illustrated here. The two-bit binary number "01" before a space indicates the number information of the overlapped sub-region, that is, corresponds to the overlapped sub-region 1; and the five-bit binary number after the space indicates region information of the five positioned time-frequency resource blocks **PRB₁, PRB₂, PRB₄, PRB₈**, and **PRB₉** sequentially. The binary number "00010" here indicates that only the positioned time-frequency resource block **PRB₈** is located in the overlapped sub-region 1. That is, in the group of bits, a first bit of the binary number indicates the region information of **PRB₁,** and the first bit of the binary number is 0 here, indicating that **PRB₁** is not located in the overlapped sub-region 1; and the fourth bit indicates the region information of **PRB₈,** and the fourth bit is 1 here, indicating that **PRB₈** is located in the overlapped sub-region 1, and so on.

203. The neighboring cell obtains region information of a positioned time-frequency resource block according to received LI signaling, where the positioned time-frequency resource block is a time-frequency resource block scheduled by an interfered user equipment of an interfered cell in each overlapped sub-region.

After receiving the LI signaling delivered by the interfered cell, the neighboring cell may obtain region information of the positioned time-frequency resource block according to the region information carried in the LI signaling, where the positioned time-frequency resource block is a time-frequency resource block scheduled by the interfered user equipment of the interfered cell in each overlapped sub-region. Still taking FIG. 3 as an example, region information of time-frequency resource blocks that are scheduled by the interfered user equipment may be obtained respectively, that is, the region information of the time-frequency resource blocks whose transmit power exceeds the RNTP threshold is obtained. It can be known from the above analysis that, the region information specifically indicates that the time-frequency resource blocks are located in the overlapped sub-region 1, the overlapped sub-region 2, or the overlapped sub-region 3. In the embodiment, the form of a set is used to indicate the region information obtained from the LI signaling, and sets A1, A2, and A3 are used to respectively indicate sequence numbers of the time-frequency resource blocks that are located in the overlapped sub-region 1, the overlapped sub-region 2, and the overlapped sub-region 3 and whose transmit power in the interfered cell exceeds the RNTP threshold. Still taking the assumption in FIG. 4 as an example for illustration, if the first method for adding region information is used, the region information carried in the LI signaling corresponds to 01101011111110010111, and in this case, the region information obtained according to the LI signaling may be indicated by A1 = {8}, A2 = {1,2}, and A3={4,9}. It can be known from the above that, the time-frequency resource block that is located in the overlapped sub-region 1 and whose transmit power exceeds the RNTP threshold is **PRB₈;** the time-frequency resource blocks that are located in the overlapped sub-region 2 and whose transmit power exceeds the RNTP threshold are **PRB₁** and **PRB₂;** and the time-frequency resource blocks that are located in the overlapped sub-region 3 and whose transmit power exceeds the RNTP threshold are **PRB₄** and **PRB₉.**

204. The neighboring cell obtains, according to a scheduling result of a current cell, region information of a time-frequency resource block that is scheduled by the user equipment in the current cell in each overlapped sub-region.

The neighboring cell obtains, according to the scheduling result of the current cell, region information of time-frequency resource blocks scheduled by the user equipment in the current cell in each overlapped sub-region. Still taking FIG. 3 as an example, region information of the time-frequency resource blocks that are scheduled by the user equipment in the current may be obtained respectively. In the embodiment, the form of a set is also used to indicate the obtained region information, and sets B1, B2, and B3 are used to respectively indicate sequence numbers of the time-frequency resource blocks that are located in the overlapped sub-region 1, the overlapped sub-region 2, and the overlapped sub-region 3 and are invoked by the user equipment in the current cell.

In 205, the neighboring cell obtains time-frequency resource blocks in the overlapped sub-region according to the region information of the positioned time-frequency resource block and the region information of the time-frequency resource block that is scheduled by the user equipment of the current cell, judges whether the positioned time-frequency resource block in the overlapped sub-regions is the same as the time-frequency resource block scheduled by the user equipment of the current cell; if yes, executes 206; and otherwise, ends the procedure.

After the neighboring cell obtains the region information of the time-frequency resource blocks in the interfered cell whose transmit power exceeds the RNTP threshold and the region information of the time-frequency resource blocks that are scheduled by each user equipment in the current cell, that is, after obtaining sets A1, A2, and A3 and sets B1, B2, and B3, the neighboring cell obtains the time-frequency resource blocks in the overlapped sub-regions according to the obtained region information, and judges whether the positioned time-frequency resource blocks in each overlapped sub-region are the same as the time-frequency resource blocks that are scheduled by the user equipment in the current cell respectively, that is, judging whether Ai∩Bi is null respectively, where i = 1, 2, or 3. Judge whether an intersection between sets A1 and B1 exists; if yes, it indicates that the time-frequency resource blocks same as the time-frequency resource blocks that are scheduled by the interfered user equipment exist in the current cell, indicating that the current cell generates interference on the interfered cell, and a specific time-frequency resource block that generates interference may be determined, then a UE scheduling the time-frequency resource block that generates interference in the current cell may be known through the schedule information of the current cell, and then the subsequent 206 is executed. If all A1∩B1, A2∩B2, and A3∩B3 are not null, it indicates that a UE interfering with the interfered cell does not exist in the current cell, and the interference coordination processing on the current cell in the procedure ends.

206. The neighboring cell performs interference coordination processing on the time-frequency resource blocks that are in the current cell and are the same as the positioned time-frequency resource blocks.

Through a judgment of the above 205, when it is determined that the time-frequency resource block same as the positioned time-frequency resource block exists in the neighboring cell, that is, the time-frequency resource block same as the time-frequency resource block scheduled by the interfered user equipment exists, interference coordination processing is performed on the time-frequency resource block that is in the current cell and the UE that schedules the time-frequency resource block. Specifically, the time-frequency resource block scheduled by the user equipment in the neighboring cell may be directly staggered from the time-frequency resource block that is in the interfered cell and is the same as the time-frequency resource block scheduled by the user equipment, and the user equipment scheduling the time-frequency resource block is caused to schedule other time-frequency resource blocks, so that the other time-frequency resource blocks are staggered from the time-frequency resource block scheduled by the interfered UE, thus implementing staggering of the UE in the neighboring cell from the interfered UE in a time domain or in a frequency domain. Or, the transmit power on the time-frequency resource block that is in the neighboring cell and is the same as the time-frequency resource block scheduled by the interfered user equipment is directly reduced, so as to solve the interference on the interfered UE in the interfered cell.

The embodiment provides a method for interference coordination processing. Each neighboring cell of the interfered cell obtains, according to received LI signaling sent by the interfered cell, region information of a time-frequency resource block that is scheduled by an interfered user equipment of the interfered cell in each overlapped sub-region, then obtains region information of a time-frequency resource block that is scheduled by a user equipment in the current cell in each overlapped sub-region, and when it is determined, according to respective region information, that the time-frequency resource block scheduled by the interfered user equipment in an overlapped sub-region is the same as the time-frequency resource block scheduled by the user equipment in the current cell, performs interference coordination processing on the time-frequency resource block that is in the neighboring cell and is the same as the time-frequency resource block scheduled by the interfered user equipment. According to the embodiment, a problem of incorrect adjustment caused by a case that a blind adjustment policy is used to perform interference coordination in the prior art is solved, and it is implemented that accurate scheduling is performed, according to position information of the interfered UE, on the time-frequency resource blocks in the cell that generates interference, so that the inter-cell interference coordination algorithm is more accurate and the accuracy of the interference coordination is improved greatly.

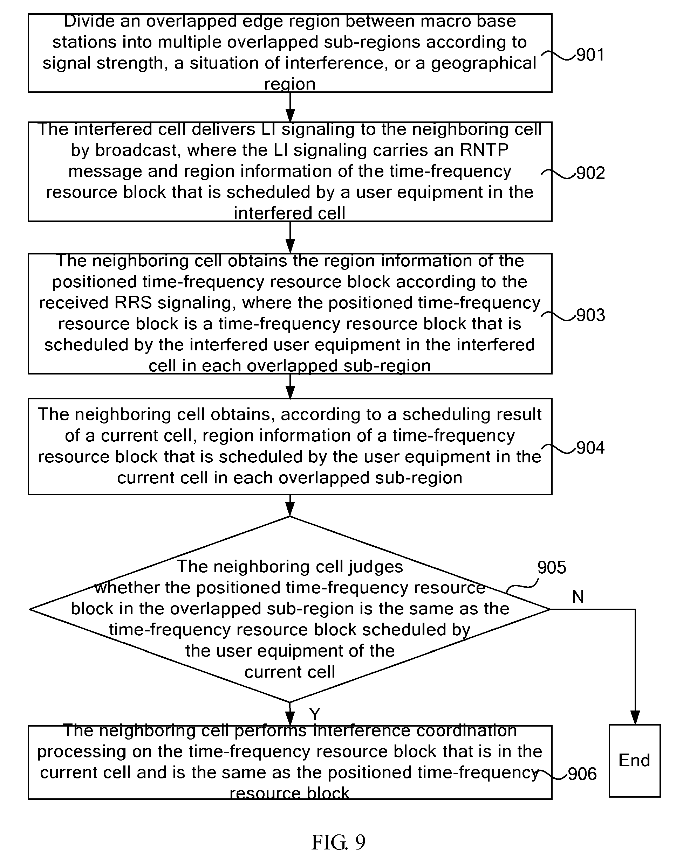

FIG. 9 is a flowchart of another embodiment of a method for interference coordination processing according to the present invention. As shown in FIG. 9, the embodiment provides a method for interference coordination processing, and is a specific implementation of the above first embodiment. The embodiment is specifically applied in an interference coordination scenario of downlink transmission. Those skilled in the art may understand that, the embodiment may also be applied in an OFDM system such as a LTE or a LTE-A. Specifically, the method for interference coordination processing provided in the embodiment may be specifically described as follows:

901. Divide an overlapped edge region between macro base stations into multiple overlapped sub-regions according to signal strength and a situation of interference, and notify the divided overlapped sub-regions to a neighboring macro base station and a low-power node. 901 may be similar to 201, and is not repeated here.

902. The interfered cell delivers LI signaling and radio resource status (Radio Resource Status, RRS for short) signaling to a neighboring cell by broadcast, where the LI signaling carries an RNTP message and the RRS signaling carries region information of the time-frequency resource block that is scheduled by the user equipment in the interfered cell.

When a proportion of positioned time-frequency resource blocks in the interfered cell exceeds a preset proportion threshold, the interfered cell is triggered to deliver LI signaling to the neighboring cell by broadcast, and at the same time, the interfered cell sends RRS signaling to the neighboring cell, where the LI signaling carries an RNTP message and the RRS signaling carries region information of time-frequency resource blocks scheduled by all user equipments in the interfered cell. Table 2 describes a signaling structure of RRS signaling in the embodiment.

**Table 2 Signaling structure of RRS signaling in the embodiment**

| **IE/Group Name** | **Presence** | **Range** | **IE type and reference** | **Semantics description** |
|---|---|---|---|---|
| DL GBR PRB usage | M | | INTEGER (0..100) | |
| UL GBR PRB usage | M | | INTEGER (0..100) | |
| DL non-GBR PRB usage | M | | INTEGER (0..100) | |
| UL non-GBR PRB usage | M | | INTEGER (0..100) | |
| DL Total PRB usage | M | | INTEGER (0..100) | |
| UL Total PRB usage | M | | INTEGER (0..100) | |
| ***Used PRB in each region*** | *M* | | ***INTEGER (0..100)*** | |

The "Used PRB in each region" in Table 3 is the content newly added by the embodiment to the RRS signaling, and is added at the end of the RRS signaling. The region information that is of the time-frequency resource blocks scheduled by all user equipments in the interfered cell and is carried in the RRS signaling is used to indicate the region information of the overlapped sub-region where the time-frequency resource blocks invoked by each user equipment are located. In the embodiment, the method for adding region information to the RRS signaling may be similar to the method for adding region information to the LI signaling in the above embodiment, and is not repeated here.

903. The neighboring cell obtains the region information of the positioned time-frequency resource block according to the received RRS signaling, where the positioned time-frequency resource block is region information of time-frequency resource block that is scheduled by the interfered user equipment in the interfered cell in each overlapped sub-region. 903 may be similar to 203, only differing in that the transmission signaling is RRS signaling rather than LI signaling, and is not repeated here.

904. The neighboring cell obtains, according to a scheduling result of a current cell, region information of a time-frequency resource block that scheduled by the user equipment in the current cell in each overlapped sub-region. 904 may be similar to 204, and is not repeated here.

905. The neighboring cell obtains time-frequency resource blocks in the overlapped sub-regions according to the region information of the positioned time-frequency resource block and the region information of the time-frequency resource block that is scheduled by the user equipment of the current cell, and judges whether the positioned time-frequency resource block in the overlapped sub-region is the same as the time-frequency resource block that is scheduled by the user equipment of the current cell; if yes, executes 906; and otherwise, ends the procedure. 905 may be similar to 205, and is not repeated here.

906. The neighboring cell performs interference coordination processing on the time-frequency resource block that is in the current cell and is the same as the positioned time-frequency resource block. 906 may be similar to 206, and is not repeated here.

The embodiment provides a method for interference coordination processing. Each neighboring cell of the interfered cell obtains, according to the received LI signaling and RRS signaling that are sent by the interfered cell and through the RRS signaling, region information of time-frequency resource block that is scheduled by an interfered user equipment of the interfered cell in each overlapped sub-region, then obtains region information of time-frequency resource block that is scheduled by a user equipment in a current cell in each overlapped sub-region; and when it is determined, according to respective region information, that the time-frequency resource block scheduled by the interfered user equipment in an overlapped sub-region is the same as the time-frequency resource block scheduled by the user equipment in the current cell, performs interference coordination processing on the time-frequency resource block that is in the neighboring cell and is the same as the time-frequency resource block scheduled by the interfered user equipment. According to the embodiment, a problem of incorrect adjustment caused by a case that a blind adjustment policy is used to perform interference coordination in the prior art is solved, and it is implemented that accurate scheduling is performed, according to the position information of the interfered UE, on the time-frequency resource block in the cell that generates interference, so that the inter-cell interference coordination algorithm is more accurate and the accuracy of the interference coordination is improved greatly.

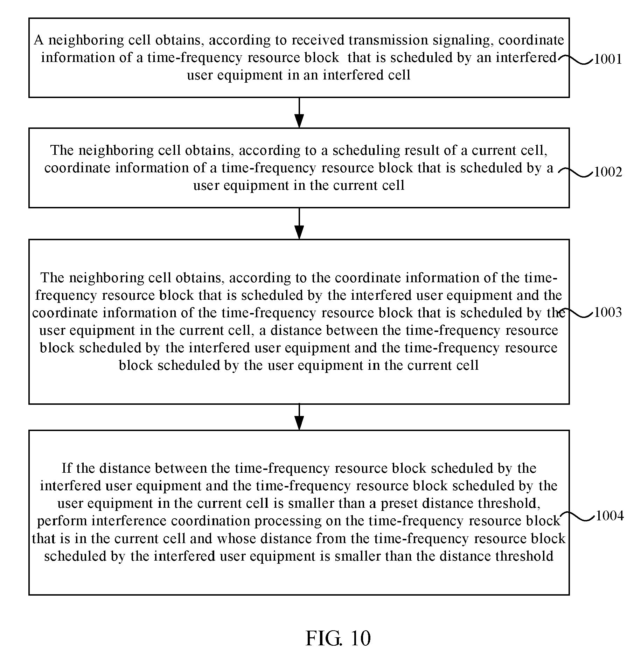

FIG. 10 is a flowchart of another embodiment of a method for interference coordination processing according to the present invention. As shown in FIG. 10, the embodiment provides a method for interference coordination processing, and may be specifically described as follows:

1001. A neighboring cell obtains, according to received transmission signaling, coordinate information of a time-frequency resource block that is scheduled by an interfered user equipment in an interfered cell.

1002. The neighboring cell obtains, according to a scheduling result of a current cell, coordinate information of a time-frequency resource block that is scheduled by a user equipment in the current cell.

1003. The neighboring cell obtains, according to the coordinate information of the time-frequency resource block that is scheduled by the interfered user equipment and the coordinate information of the time-frequency resource block that is scheduled by the user equipment in the current cell, a distance between the time-frequency resource block scheduled by the interfered user equipment and the time-frequency resource block scheduled by the user equipment in the current cell.

1004. If the distance between the time-frequency resource block scheduled by the interfered user equipment and the time-frequency resource block scheduled by the user equipment in the current cell is smaller than a preset distance threshold, the neighboring cell performs interference coordination processing on the time-frequency resource block that is in the current cell and whose distance from the time-frequency resource block scheduled by the interfered user equipment is smaller than the distance threshold.

The embodiment provides a method for interference coordination processing. Each neighboring cell of the interfered cell obtains, according to the received transmission signaling sent by the interfered cell, coordinate information of a time-frequency resource block that is scheduled by an interfered user equipment of the interfered cell, then obtains coordinate information of a time-frequency resource block that is scheduled by a user equipment in the current cell, and a the distance that is between the time-frequency resource block scheduled by the interfered user equipment and the time-frequency resource block scheduled by the user equipment in the current cell and is obtained according to respective coordinate information is smaller than a preset distance threshold, performs interference coordination processing on the time-frequency resource block that is in the neighboring cell and whose distance from the time-frequency resource block scheduled by the interfered user equipment is smaller than the distance threshold. According to the embodiment, a problem of incorrect adjustment caused by a case that a blind adjustment policy is used to perform interference coordination in the prior art is solved, and it is implemented that accurate scheduling is performed, according to the position information of the interfered UE, on the time-frequency resource block in the cell that generates interference, so that the inter-cell interference coordination algorithm is more accurate and the accuracy of the interference coordination is improved greatly.

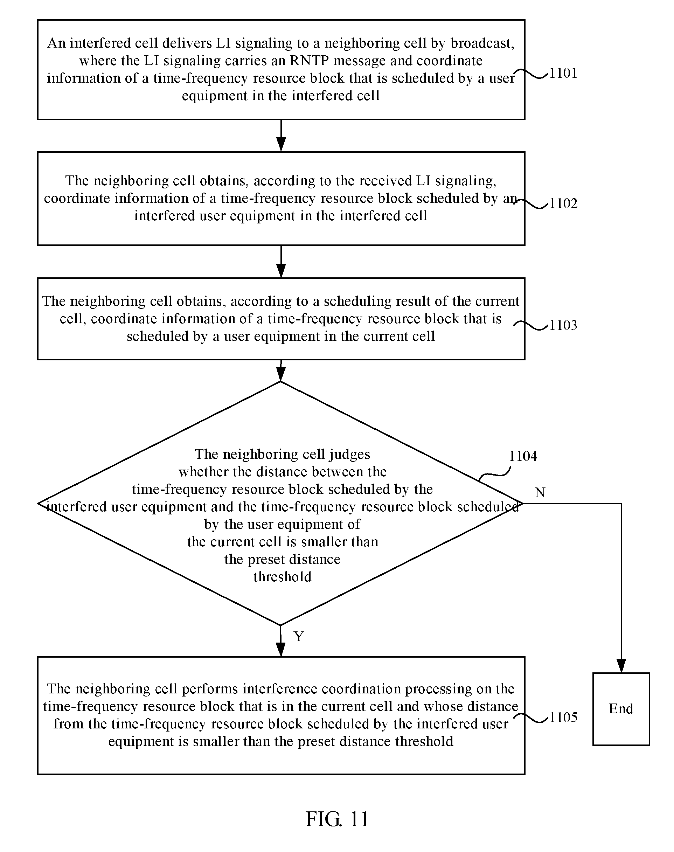

FIG. 11 is a flowchart of another embodiment of a method for interference coordination processing according to the present invention. As shown in FIG. 11, the embodiment of the present invention provides another method for interference coordination processing, and is a specific implementation of the above embodiment shown in FIG. 4. The embodiment is specifically applied in an interference coordination scenario of downlink transmission. Those skilled in the art may understand that the embodiment may also be applied in an OFDM system such as a LTE or a LTE-A. Specifically, the method for interference coordination processing provided by the embodiment may be specifically described as follows.

1101. An interfered cell delivers LI signaling to a neighboring cell by broadcast, where the LI signaling carries an RNTP message and coordinate information of a time-frequency resource block that is scheduled by a user equipment in the interfered cell.

1101 may be similar to 202, and similar parts are not repeated here. The difference lies in that, when the proportion of positioned time-frequency resource blocks in the interfered cell exceeds a preset proportion threshold, the interfered cell is triggered to deliver LI signaling to the neighboring cell by broadcast, where the LI signaling carries an RNTP message and coordinate information of time-frequency resource blocks that are scheduled by all user equipments in the interfered cell. In this case, the information newly added to the LI signaling shown in Table 1 is coordinate information of time-frequency resource blocks that are scheduled by all user equipments in the interfered cell, rather than the region information of time-frequency resource blocks that are scheduled by all user equipments in the interfered cell.

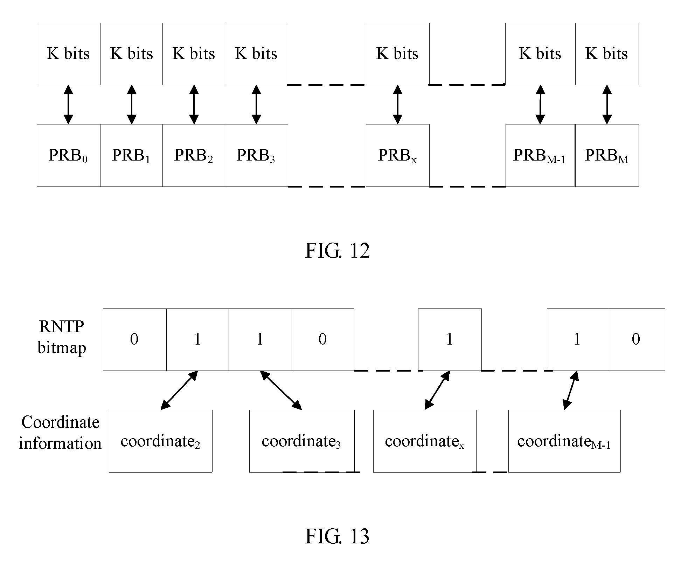

Specifically, in the embodiment, the coordinate information of the time-frequency resource blocks that are scheduled by the user equipment in the LI is bit values that correspond to the coordinate information of all time-frequency resource blocks in the interfered cell. FIG. 12 is a first schematic diagram of coordinate information in another embodiment of a method for interference coordination processing according to the present invention. FIG. 12 shows a method for adding coordinate information to the LI signaling. The form of a bitmap is used to encode the coordinate information of each time-frequency resource block. In FIG. 12, the first group of K bits corresponds to the zeroth time-frequency resource block **(PRB₀);** the second group of K bits corresponds to the first time-frequency resource block (**PRB₁**); and so on. The K bits are used to indicate an x-coordinate value and a y-coordinate value in the coordinate information, and a binary representation method of each coordinate value may be the same as the bitmap representation method in 202, and is not repeated here.

Or, in the embodiment, the coordinate information that is of the time-frequency resource block scheduled by the user equipment and is carried in the LI signaling delivered by broadcast is a bit value that corresponds to the coordinate information of the positioned time-frequency resource block in the interfered cell. As shown in FIG. 3, FIG. 13 is a second schematic diagram of coordinate information in another embodiment of a method for interference coordination processing according to the present invention. FIG. 13 shows another method for adding coordinate information to the LI signaling, and this method is similar to the method shown in FIG. 12. In the method shown in FIG. 13, only the coordinate information of the positioned time-frequency resource blocks may be added to the LI signaling. It can be known from the above that, the RNTP message already includes the positioning information of each time-frequency resource block, and therefore, the coordinate information of the positioned time-frequency resource blocks may be acquired according to the positioning information. In FIG. 13, the first row shows the RNTP bitmap in the RNTP message, where the binary number 1 indicates that the corresponding time-frequency resource block is positioned, while the second row is the coordinate information added to the LI signaling. The coordinate information corresponds to the RNTP bitmap, and only the coordinate information of the positioned time-frequency resource block is stored.

1102. The neighboring cell obtains, according to the received LI signaling, coordinate information of a time-frequency resource block that is scheduled by an interfered user equipment in an interfered cell.

After receiving the LI signaling delivered by the interfered cell, the neighboring cell may obtain, according to the coordinate information carried in the LI signaling, the coordinate information of the time-frequency resource block that is scheduled by the interfered user equipment of the interfered cell. The coordinate information of the time-frequency resource blocks whose transmit power exceeds the RNTP threshold may be obtained respectively. In the embodiment, **(RBᵢ, X₁ᵢ, Y₁ᵢ)** is used to indicate the coordinate information of the time-frequency resource block in the interfered cell.

1103. The neighboring cell obtains, according to a scheduling result of a current cell, coordinate information of a time-frequency resource block that is scheduled by a user equipment in the current cell.

The neighboring cell obtains, according to the scheduling result of the current cell, coordinate information of the time-frequency resource block that is scheduled by the user equipment in the current cell. Here **(RBᵢ, X₂ᵢ, Y₂ᵢ)** is used to indicate the coordinate information of the time-frequency resource block that is scheduled by the UE in the neighboring cell of the interfered cell.

1104. The neighboring cell obtains, according to the coordinate information of the time-frequency resource block that is scheduled by the interfered user equipment and the coordinate information of the time-frequency resource block that is scheduled by the user equipment of the current cell, a distance between the time-frequency resource block scheduled by the interfered user equipment and the time-frequency resource block scheduled by the user equipment of the current cell, and judges whether the distance between the time-frequency resource block scheduled by the interfered user equipment and the time-frequency resource block scheduled by the user equipment of the current cell is smaller than the preset distance threshold; if yes, executes 1105; and otherwise, ends the procedure.

The neighboring cell may obtain, according to respective coordinate information, the coordinate position **(X₁ᵢ, Y₁ᵢ)** of the time-frequency resource block that is scheduled by the interfered UE in the interfered cell, and the coordinate position **(X₂ᵢ, Y₂ᵢ)** of the time-frequency resource block that is scheduled by the UE in the neighboring cell. The neighboring cell obtains, according to respective coordinate positions, the distance between the time-frequency resource block that is scheduled by the interfered user equipment and the time-frequency resource block that is scheduled by the user equipment of the current cell, and judges whether the distance between the time-frequency resource block scheduled by each interfered UE and a time-frequency resource block scheduled by the UE in the current cell is smaller than the preset distance threshold; if yes, adds the time-frequency resource block in the current cell to the processing queue; otherwise, does not process the time-frequency resource block in the current cell, and continues to analyze the distance between the next time-frequency resource block in the current cell and the interfered time-frequency resource block until time-frequency resource blocks scheduled by all interfered UEs are traversed. If the processing queue is not null, 1105 is executed; and otherwise, the procedure ends.

1105. The neighboring cell performs interference coordination processing on the time-frequency resource block that is in the current cell and whose distance from the time-frequency resource block scheduled by the interfered user equipment is smaller than the preset distance threshold.

Through a judgment of the above 1104, when the processing queue is not null, that is, when it is determined that the time-frequency resource block whose distance from the time-frequency resource block scheduled by the interfered user equipment is smaller than the distance threshold exists in the neighboring cell, interference coordination processing is performed on the time-frequency resource block that is in the processing queue and the UE that schedules the time-frequency block. Specifically, the time-frequency resource block scheduled by the user equipment in the neighboring cell may be directly staggered from the time-frequency resource block whose distance from the time-frequency resource block scheduled by the user equipment is shorter in the interfered cell, and the user equipment scheduling the time-frequency resource block is caused to schedule other time-frequency resource blocks, so that the other time-frequency resource blocks are staggered from the time-frequency resource block scheduled by the interfered UE in the interfered cell, thus implementing staggering of the UE in the neighboring cell from the interfered UE in a time domain or a frequency domain. Or, the transmit power on the time-frequency resource block that is in the neighboring cell and whose distance from the time-frequency resource block scheduled by the interfered user equipment is shorter is directly reduced, so as to solve the interference on the interfered UE in the interfered cell. The specific method for interference coordination processing may be similar to that in 206, and is not repeated here.

The embodiment provides a method for interference coordination processing. Each neighboring cell of the interfered cell obtains, according to the received LI signaling sent by the interfered cell, coordinate information of a time-frequency resource block that is scheduled by an interfered user equipment of the interfered cell, then obtains coordinate information of a time-frequency resource block scheduled by a user equipment in the current cell; and when it is determined, according to respective coordinate information, that the distance between the time-frequency resource block scheduled by the interfered user equipment and the time-frequency resource block scheduled by the user equipment in the current cell is smaller than a preset distance threshold, performs interference coordination processing on the time-frequency resource block that is in the neighboring cell and whose distance from the time-frequency resource block scheduled by the interfered user equipment is smaller than the distance threshold. According to the embodiment, a problem of incorrect adjustment caused by a case that a blind adjustment policy is used to perform interference coordination in the prior art is solved, and it is implemented that accurate scheduling is performed, according to the position information of the interfered UE, on the time-frequency resource block in the cell that generates interference, so that the inter-cell interference coordination algorithm is more accurate and the accuracy of the interference coordination is improved greatly.

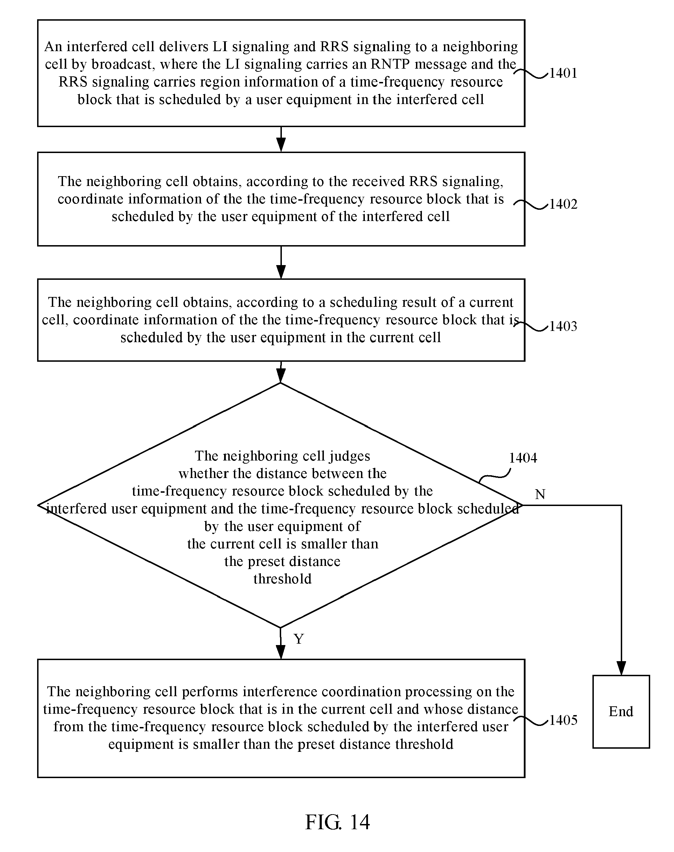

FIG. 14 is a flowchart of another embodiment of a method for interference coordination processing according to the present invention. As shown in FIG. 14, the embodiment provides another method for interference coordination processing, and is a specific implementation of the above embodiment shown in FIG. 4. The embodiment is specifically applied in an interference coordination scenario of downlink transmission. Those skilled in the art may understand that, the embodiment may also be applied in an OFDM system such as a LTE or a LTE-A. Specifically, the method for interference coordination processing provided by the embodiment may be specifically described as follows:

1401. An interfered cell delivers LI signaling and RRS signaling to a neighboring cell, where the LI signaling carries an RNTP message and the RRS signaling carries region information of a time-frequency resource block that is scheduled by a user equipment in the interfered cell.

1402. The neighboring cell obtains, according to the received RRS signaling, coordinate information of the time-frequency resource block that is scheduled by the interfered user equipment of the interfered cell. The step may be similar to 1102, only differing in that the transmission signaling is RRS signaling rather than LI signaling, and is not repeated here.

1403. The neighboring cell obtains, according to a scheduling result of a current cell, coordinate information of the time-frequency resource block that is scheduled by the user equipment in the current cell. 1403 may be similar to 1103, and is not repeated here.

1404. The neighboring cell obtains, according to the coordinate information of the time-frequency resource block that is scheduled by the interfered user equipment and the coordinate information of the time-frequency resource block that is scheduled by the user equipment of the current cell, a distance between the time-frequency resource block scheduled by the interfered user equipment and the time-frequency resource block scheduled by the user equipment of the current cell, and judges whether the distance between the time-frequency resource block scheduled by the interfered user equipment and the time-frequency resource block scheduled by the user equipment of the current cell is smaller than the preset distance threshold; if yes, executes 1405; and otherwise, ends the procedure. 1404 may be similar to 1104, and is not repeated here.

1405. The neighboring cell performs interference coordination processing on the time-frequency resource block that is in the current cell and whose distance from the time-frequency resource block scheduled by the interfered user equipment is smaller than the preset distance threshold. 1405 may be similar to 1105, and is not repeated here.

The embodiment provides a method for interference coordination processing. Each neighboring cell of the interfered cell obtains, according to the received RRS signaling sent by the interfered cell, coordinate information of a time-frequency resource block that is scheduled by an interfered user equipment of the interfered cell, then obtains coordinate information of a time-frequency resource block that is scheduled by a user equipment in the current cell; and when it is determined, according to respective coordinate information, that the distance between the time-frequency resource block scheduled by the interfered user equipment and the time-frequency resource block scheduled by the user equipment in the current cell is determined is smaller than a preset distance threshold, performs interference coordination processing on the time-frequency resource block that is in the neighboring cell and whose distance from the time-frequency resource block scheduled by the interfered user equipment is smaller than the distance threshold. According to the embodiment, a problem of incorrect adjustment caused by a case that a blind adjustment policy is used to perform interference coordination in the prior art is solved, and it is implemented that accurate scheduling is performed, according to the position information of the interfered UE, on the time-frequency resource block in the cell that generates interference, so that the inter-cell interference coordination algorithm is more accurate and the accuracy of the interference coordination is improved greatly.

Those of ordinary skill in the art may understand that, all or part of the steps in the method embodiments may be accomplished by a program instructing relevant. The program may be stored in a computer readable storage medium. When the program runs, the steps of the method embodiments are executed. The storage medium is any medium capable of storing a program code, such as a ROM, a RAM, a magnetic disk, or an optical disk.

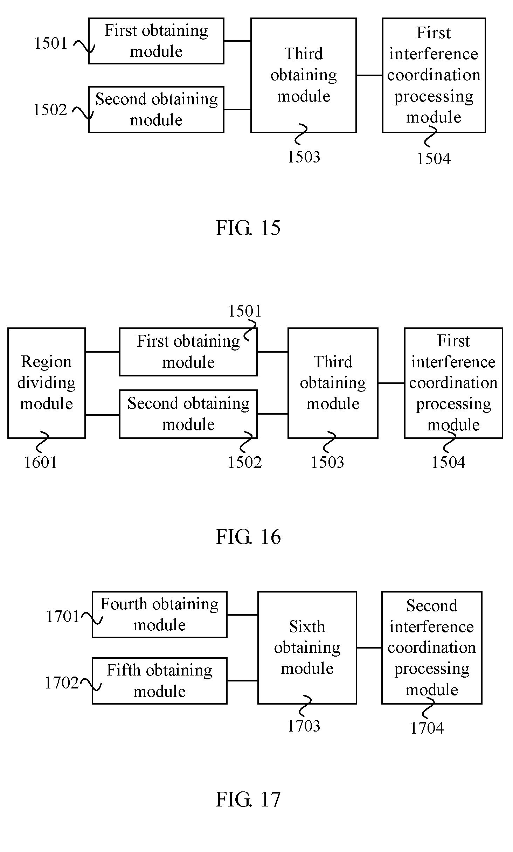

FIG. 15 is a schematic structural diagram of an embodiment of an apparatus for interference coordination processing according to the present invention. The embodiment provides an apparatus for interference coordination processing, which may specifically execute each step of the embodiment of the above method shown in FIG. 1, and is not repeated here. The apparatus for interference coordination processing provided in the embodiment may specifically include a first obtaining module 1501, a second obtaining module 1502, a third obtaining module 1503, and a first interference coordination processing module 1504. The first obtaining module 1501 is configured to obtain region information of a positioned time-frequency resource block according to received transmission signaling, where the positioned time-frequency resource block is a time-frequency resource block scheduled by an interfered user equipment of an interfered cell in each overlapped sub-region. The second obtaining module 1502 is configured to obtain, according to a scheduling result of a current cell, region information of a time-frequency resource block that is scheduled by a user equipment in the current cell in each overlapped sub-region. The third obtaining module 1503 is configured to obtain time-frequency resource blocks in the overlapped sub-region according to the region information that is of the positioned time-frequency resource block and is obtained by the first obtaining module 1501 and the region information that is of the time-frequency resource block scheduled by the user equipment of the current cell and is obtained by the second obtaining module 1502. The first interference coordination processing module 1504 is configured to perform interference coordination processing on the time-frequency resource block that is in the current cell and is the same as the positioned time-frequency resource block if the positioned time-frequency resource block that is in the overlapped sub-region and is obtained by the third obtaining module 1503 is the same as the time-frequency resource block scheduled by the user equipment in the current cell.

The present invention further provides a base station. A structure of the base station is similar to that of the apparatus for interference coordination shown in FIG. 15, and is not repeated here.

FIG. 16 is a schematic structural diagram of an embodiment of an apparatus for interference coordination processing according to the present invention. The embodiment provides an apparatus for interference coordination processing, which may specifically execute each step of the embodiment of the above method shown in FIG. 2, and is not repeated here. On the basis of the embodiment shown in the above FIG. 15, the apparatus for interference coordination processing provided in the embodiment may further include a region dividing module 1601. The region dividing module 1601 is configured to divide an overlapped edge region between macro base stations into multiple overlapped sub-regions according to signal strength, a situation of interference, and a geographical region, and notify the divided overlapped sub-regions to a neighboring macro base station and a low-power node.

Further, the first obtaining module 1501 in the apparatus for interference coordination processing provided in the embodiment may be specifically configured to, if the transmission signaling in the embodiment is LI signaling, obtain the region information of the positioned time-frequency resource block according to the received LI signaling delivered by the interfered cell by multicast, where the LI signaling carries a relative narrowband transmit power (RNTP) message and the region information of the time-frequency resource block that is scheduled by the user equipment in the interfered cell. Or, the first obtaining module 1501 in the apparatus for interference coordination processing provided in the embodiment may be specifically configured to, if the transmission signaling in the embodiment is RRS signaling, obtain the region information of the positioned time-frequency resource block according to the received load information (LI) signaling delivered by the interfered cell by broadcast and the RRS signaling, where the LI signaling carries a relative narrowband transmit power (RNTP) message and the RRS signaling carries the region information of the time-frequency resource block that is scheduled by the user equipment in the interfered cell.

Specifically, in the embodiment, the region information that is of the time-frequency resource block scheduled by the user equipment and is carried in the LI signaling is a bit value that corresponds to the region number of the overlapped sub-region where all time-frequency resource blocks in the interfered cell are located. Or, in the embodiment, the region information that is of the time-frequency resource block scheduled by the user equipment and is carried in the LI signaling is a bit value that corresponds to the region number of the overlapped sub-region where the positioned time-frequency resource block in the interfered cell is located. Or, in the embodiment, the region information that is of the time-frequency resource block scheduled by the user equipment and is carried in the LI signaling is region number information of the overlapped sub-region and sequence number information of the positioned time-frequency resource block in the interfered cell in each overlapped sub-region. Or, in the embodiment, the region information that is of the time-frequency resource block scheduled by the user equipment and is carried in the LI signaling is region number information of the overlapped sub-region and region bit values of all time-frequency resource blocks in the interfered cell, where the region bit values are used to identify whether the time-frequency resource blocks are located in the current overlapped sub-region. Or, in the embodiment, the region information that is of the time-frequency resource block scheduled by the user equipment and is carried in the LI signaling is region number information of the overlapped sub-region and region bit values of positioned time-frequency resource blocks in the interfered cell, where the region bit values are used to identify whether the positioned time-frequency resource blocks are located in the current overlapped sub-region.

The embodiment provides an apparatus for interference coordination processing. Each neighboring cell of the interfered cell obtains, according to the received transmission signaling sent by the interfered cell, region information of a time-frequency resource block that is scheduled by an interfered user equipment of the interfered cell in each overlapped sub-region, then obtains region information of a time-frequency resource block that is scheduled by a user equipment in the current cell in each overlapped sub-region; and if the time-frequency resource blocks that is obtained according to respective region information and are scheduled by the interfered user equipment in an overlapped sub-region are the same as the time-frequency resource blocks scheduled by the user equipment in the current cell, performs interference coordination processing on the time-frequency resource blocks that are in the neighboring cell and the same as the time-frequency resource blocks scheduled by the interfered user equipment. According to the embodiment, a problem of incorrect adjustment caused by a case that a blind adjustment policy is used to perform interference coordination in the prior art is solved, and it is implemented that accurate scheduling is performed, according to the position information of the interfered UE, on the time-frequency resource blocks in the cell that generates interference, so that the inter-cell interference coordination algorithm is more accurate and the accuracy of the interference coordination is improved greatly.

The present invention further provides a base station. A structure of the base station is similar to that of the apparatus for interference coordination shown in FIG. 16, and is not repeated here.

FIG. 17 is a schematic structural diagram of an embodiment of an apparatus for interference coordination processing according to the present invention. The embodiment provides an apparatus for interference coordination processing, which may specifically execute each step of the embodiment of the above method shown in FIG. 4, and is not repeated here. The apparatus for interference coordination processing provided in the embodiment may specifically include a fourth obtaining module 1701, a fifth obtaining module 1702, a sixth obtaining module 1703, and a second interference coordination processing module 1704. The fourth obtaining module 1701 is configured to obtain, according to received transmission signaling, coordinate information of a time-frequency resource block that is scheduled by an interfered user equipment in an interfered cell. The fifth obtaining module 1702 is configured to obtain, according to a scheduling result of a current cell, coordinate information of a time-frequency resource block that is scheduled by a user equipment in the current cell. The sixth obtaining module 1703 is configured to obtain, according to the coordinate information that is of the time-frequency resource block scheduled by the interfered user equipment and is obtained by the fourth obtaining module 1701 and the coordinate information that is of the time-frequency resource block scheduled by the user equipment in the current cell and is obtained by the fifth obtaining module 1702, a distance between the time-frequency resource block scheduled by the interfered user equipment and the time-frequency resource block scheduled by the user equipment in the current cell. The second interference coordination processing module 1704 is configured to perform, if the distance that is between the time-frequency resource block scheduled by the interfered user equipment and the time-frequency resource block scheduled by the user equipment in the current cell and is obtained by the sixth obtaining module 1703 is smaller than a preset distance threshold, interference coordination processing on the time-frequency resource block that is in the current cell and whose distance from the time-frequency resource block scheduled by the interfered user equipment is smaller than the distance threshold.

Further, on the basis of the embodiment of the apparatus for interference coordination processing shown in FIG. 17, the fourth obtaining module 1701 in the apparatus may be specifically configured to obtain, if the transmission signaling in the embodiment is load information (LI) signaling, according to the LI signaling delivered by the interfered cell by broadcast, the coordinate information of the time-frequency resource block that is scheduled by the interfered user equipment of the interfered cell, where the LI signaling carries a relative narrowband transmit power (RNTP) message and the coordinate information of the time-frequency resource block that is scheduled by the user equipment in the interfered cell. Or, the fourth obtaining module 1701 in the apparatus may be specifically configured to obtain, if the transmission signaling in the embodiment is RRS signaling, according to the received load information (LI) signaling delivered by the interfered cell by broadcast and the RRS signaling, the coordinate information of the time-frequency resource block that is scheduled by the interfered user equipment in the interfered cell, where the LI signaling carries a relative narrowband transmit power (RNTP) message and the RRS signaling carries the coordinate information of the time-frequency resource block that is scheduled by the user equipment in the interfered cell.

The embodiment provides an apparatus for interference coordination processing. Each neighboring cell of the interfered cell obtains, according to the received LI signaling sent by the interfered cell, coordinate information of a time-frequency resource block that is scheduled by an interfered user equipment of the interfered cell, then obtains coordinate information of a time-frequency resource block that is scheduled by a user equipment in the current cell, and when a distance that is between the time-frequency resource block scheduled by the interfered user equipment and the time-frequency resource block scheduled by the user equipment in the current cell and is obtained according to respective coordinate information is smaller than a preset distance threshold, performs interference coordination processing on the time-frequency resource block that is in the neighboring cell and whose distance from the time-frequency resource block scheduled by the interfered user equipment is smaller than the distance threshold. According to the embodiment, a problem of incorrect adjustment caused by a case that a blind adjustment policy is used to perform interference coordination in the prior art is solved, and it is implemented that accurate scheduling is performed, according to the position information of the interfered UE, on the time-frequency resource block in the cell that generates interference, so that the inter-cell interference coordination algorithm is more accurate and the accuracy of the interference coordination is improved greatly.

## Claims

1. A method for interference coordination processing, comprising:
obtaining region information of a positioned time-frequency resource block, wherein the positioned time-frequency resource block is a time-frequency resource block scheduled by an interfered user equipment of an interfered cell in each overlapped sub-region;
obtaining, according to a scheduling result of a current cell, region information of a time-frequency resource block that is scheduled by a user equipment in the current cell in each overlapped sub-region;
obtaining time-frequency resource blocks in the overlapped sub-region according to the region information of the positioned time-frequency resource block and the region information of the time-frequency resource block that is scheduled by the user equipment in the current cell; and
if the positioned time-frequency resource block in the overlapped sub-region is the same as the time-frequency resource block scheduled by the user equipment in the current cell, performing interference coordination processing on the time-frequency resource block that is in the current cell and is the same as the positioned time-frequency resource block.

2. The method according to claim 1, wherein the method further comprises: dividing an overlapped edge region between each macro base station and an overlapped edge region between a macro base station and a low-power node into multiple overlapped sub-regions according to signal strength, a situation of interference, and a geographical region, or according to one of signal strength, a situation of interference, and a physical region, and notifying the divided overlapped sub-regions to a neighboring macro base station and a low-power node.

3. The method according to claim 1 or 2, wherein: the method further comprises receiving transmission signaling; and
the obtaining region information of a positioned time-frequency resource block specifically comprises obtaining, according to the received transmission signaling, the region information of the positioned time-frequency resource block.

4. The method according to claim 3, wherein:
if the transmission signaling is load information LI signaling, the obtaining the region information of the positioned time-frequency resource block according to the received transmission signaling comprises:
obtaining the region information of the positioned time-frequency resource block according to the received LI signaling delivered by the interfered cell by broadcast, wherein the LI signaling carries a relative narrowband transmit power RNTP message and the region information of the time-frequency resource block that is scheduled by the user equipment in the interfered cell; or
if the transmission signaling is radio resource status RRS signaling, the obtaining the region information of the positioned time-frequency resource block according to the received transmission signaling comprises:
obtaining the region information of the positioned time-frequency resource block according to the received load information LI signaling delivered by the interfered cell by broadcast and the RRS signaling, wherein the LI signaling carries a relative narrowband transmit power RNTP message and the RRS signaling carries the region information of the time-frequency resource block that is scheduled by the user equipment in the interfered cell.

5. The method according to claim 4, wherein:
the region information of the time-frequency resource block that is scheduled by the user equipment comprises:
a bit value corresponding to a region number of an overlapped sub-region where all time-frequency resource blocks in the interfered cell are located; or
a bit value corresponding to a region number of an overlapped sub-region where the positioned time-frequency resource block is located; or
region number information of overlapped sub-regions and sequence number information of the positioned time-frequency resource block in each of the overlapped sub-regions; or
region number information of the overlapped sub-regions and bit values of regions that all the time-frequency resource blocks belong to in the interfered cell, wherein the bit values of the regions are used to identify whether the time-frequency resource blocks are located in the current overlapped sub-region; or
region number information of the overlapped sub-regions and a bit value of a region that the positioned time-frequency resource block belongs to, wherein the bit value of the region is used to identify whether the positioned time-frequency resource block is located in the current overlapped sub-region.

6. A method for interference coordination processing, comprising:
obtaining coordinate information of a time-frequency resource block that is scheduled by an interfered user equipment in an interfered cell;
obtaining, according to a scheduling result of a current cell, coordinate information of a time-frequency resource block that is scheduled by a user equipment in the current cell;
obtaining, according to the coordinate information of the time-frequency resource block scheduled by the interfered user equipment and the coordinate information of the time-frequency resource block scheduled by the user equipment in the current cell, a distance between the time-frequency resource block scheduled by the interfered user equipment and the time-frequency resource block scheduled by the user equipment in the current cell; and
if the distance between the time-frequency resource block scheduled by the interfered user equipment and the time-frequency resource block scheduled by the user equipment in the current cell is smaller than a preset distance threshold, performing interference coordination processing on the time-frequency resource block that is in the current cell and whose distance from the time-frequency resource block scheduled by the interfered user equipment is smaller than the distance threshold.

7. The method according to claim 6, wherein: the method further comprises receiving transmission signaling;
the obtaining coordinate information of a time-frequency resource block that is scheduled by an interfered user equipment in an interfered cell specifically comprises obtaining, according to the received transmission signaling, coordinate information of the time-frequency resource block that is scheduled by the interfered user equipment; and
if the transmission signaling is load information LI signaling, the obtaining, according to the received transmission signaling, coordinate information of the time-frequency resource block that is scheduled by the interfered user equipment in the interfered cell comprises:
obtaining, according to the received LI signaling delivered by the interfered cell by broadcast, the coordinate information of the time-frequency resource block that is scheduled by the interfered user equipment in the interfered cell, wherein the LI signaling carries a relative narrowband transmit power RNTP message and the coordinate information of the time-frequency resource block that is scheduled by the user equipment in the interfered cell; or
if the transmission signaling is radio resource status RRS signaling, the obtaining, according to the received transmission signaling, coordinate information of the time-frequency resource block that is scheduled by the interfered user equipment in the interfered cell comprises:
obtaining, according to the received load information LI signaling delivered by the interfered cell by broadcast and the RRS signaling, the coordinate information of the time-frequency resource block that is scheduled by the interfered user equipment in the interfered cell, wherein the LI signaling carries a relative narrowband transmit power RNTP message and the RRS signaling carries the coordinate information of the time-frequency resource block scheduled by the user equipment in the interfered cell.

8. The method according to claim 7, wherein:
the coordinate information of the time-frequency resource block that is scheduled by the user equipment comprises:
bit values corresponding to coordinate information of all time-frequency resource blocks in the interfered cell; or
a bit value corresponding to coordinate information of the positioned time-frequency resource block in the interfered cell.

9. An apparatus for interference coordination processing, comprising:
a first obtaining module, configured to obtain region information of a positioned time-frequency resource block, wherein the positioned time-frequency resource block is a time-frequency resource block scheduled by an interfered user equipment of an interfered cell in each overlapped sub-region;
a second obtaining module, configured to obtain, according to a scheduling result of a current cell, region information of a time-frequency resource block that is scheduled by a user equipment in the current cell in each overlapped sub-region;
a third obtaining module, configured to obtain time-frequency resource blocks in the overlapped sub-region according to the region information of the positioned time-frequency resource block obtained by the first obtaining module and the region information of the time-frequency resource block that is scheduled by the user equipment of the current cell obtained by the second obtaining module; and
a first interference coordination processing module, configured to perform interference coordination processing on the time-frequency resource block that is in the current cell and is the same as the positioned time-frequency resource block if the positioned time-frequency resource block that is in the overlapped sub-region and is obtained by the third obtaining module is the same as the time-frequency resource block scheduled by the user equipment in the current cell.

10. The apparatus according to claim 9, further comprising:
a region dividing module, configured to divide an overlapped edge region between each macro base station and an overlapped edge region between a macro base station and a low-power node into multiple overlapped sub-regions according to signal strength, a situation of interference, or a geographical region, and notifying the divided overlapped sub-regions to a neighboring macro base station and a low-power node.

11. The apparatus according to claim 9 or 10, wherein:
the first obtaining module is further configured to receive transmission signaling;
the first obtaining module is specifically configured to obtain the region information of the positioned time-frequency resource block according to the received transmission signaling; and
if the transmission signaling is load information LI signaling, the first obtaining module is specifically configured to obtain the region information of the positioned time-frequency resource block according to the received LI signaling delivered by the interfered cell by broadcast, wherein the LI signaling carries a relative narrowband transmit power RNTP message and the region information of the time-frequency resource block that is scheduled by the user equipment in the interfered cell; or
if the transmission signaling is radio resource status RRS signaling, the first obtaining module is specifically configured to obtain the region information of the positioned time-frequency resource block according to the received LI signaling delivered by the interfered cell by broadcast and the RRS signaling, wherein the LI signaling carries a relative narrowband transmit power RNTP message and the RRS signaling carries the region information of the time-frequency resource block that is scheduled by the user equipment in the interfered cell.

12. An apparatus for interference coordination processing, comprising:
a fourth obtaining module, configured to obtain coordinate information of a time-frequency resource block that is scheduled by an interfered user equipment in an interfered cell;
a fifth obtaining module, configured to obtain, according to a scheduling result of a current cell, coordinate information of a time-frequency resource block that is scheduled by a user equipment in the current cell;
a sixth obtaining module, configured to obtain, according to the coordinate information that is of the time-frequency resource block scheduled by the interfered user equipment and is obtained by the fourth obtaining module and the coordinate information that is of the time-frequency resource block scheduled by the user equipment in the current cell and is obtained by the fifth obtaining module, a distance between the time-frequency resource block scheduled by the interfered user equipment and the time-frequency resource block scheduled by the user equipment in the current cell; and
a second interference coordination processing module, configured to perform, if the distance that is between the time-frequency resource block scheduled by the interfered user equipment and the time-frequency resource block scheduled by the user equipment in the current cell and is obtained by the sixth obtaining module is smaller than a preset distance threshold, interference coordination processing on the time-frequency resource block that is in the current cell and whose distance from the time-frequency resource block scheduled by the interfered user equipment is smaller than the distance threshold.

13. The apparatus according to claim 12, wherein:
the fourth obtaining module is further configured to obtain transmission signaling;
the fourth obtaining module is specifically configured to obtain, according to the received transmission signaling, the coordinate information of the time-frequency resource block that is scheduled by the interfered user equipment in the interfered cell; and
if the transmission signaling is load information LI signaling, the fourth obtaining module is specifically configured to obtain, according to the received LI signaling delivered by the interfered cell by broadcast, the coordinate information of the time-frequency resource block that is scheduled by the interfered user equipment in the interfered cell, wherein the LI signaling carries a relative narrowband transmit power RNTP message and the coordinate information of the time-frequency resource block that is scheduled by the user equipment in the interfered cell; or
if the transmission signaling is radio resource status RRS signaling, the fourth obtaining module is specifically configured to obtain, according to the received load information LI signaling delivered by the interfered cell by broadcast and the RRS signaling, the coordinate information of the time-frequency resource block that is scheduled by the interfered user equipment in the interfered cell, wherein the LI signaling carries a relative narrowband transmit power RNTP message and the RRS signaling carries the coordinate information of the time-frequency resource block that is scheduled by the user equipment in the interfered cell.
